# EUROPÄISCHE PATENTANMELDUNG

(11) **EP 1 921 329 A1**
(43) Veröffentlichungstag der Anmeldung: **14.05.2008**
(21) Anmeldenummer: 06784088.4
(22) Anmeldetag: 27.07.2006
(51) Int. Cl.: F15D 1/00, B64C 3/44, B64C 23/00

(54) **VERFAHREN ZUR VERRINGERUNG VON AERODYNAMISCHEM LÄRM (VARIANTEN) UND GERÄUSCHARMES LASTTRAGENDES ELEMENT ZUM BETRIEB IN EINER FLUIDMEDIUMSTRÖMUNG**

(30) Priorität: 04.08.2005 RU 2005124846; 04.08.2005 RU 2005124847
(71) Anmelder: Federal State Unitary Enterprise "Central Aerohydrodynamic Institute named by Prof. N.E. Zhukovsky", TSAGI, Moskovskaya obl. 140180 (RU)
(72) Erfinder: ZAYTSEV, Mikhail Yurevitch, Zhukovsky Moskovskaya obl., 140160 (RU); OSTRIKOV, Nikolay Nikolaevitch, Moscow, 109088 (RU); TCHERNUSHEV, Sergey Anatolevitch, Ljubertsy Moskovskaya obl., 140002 (RU); KOPIEV, Viktor Feliksovitch, Moscow, 119296 (RU)
(74) Vertreter: Jeck, Anton
(86) Internationale Anmeldenummer: PCT/RU2006/000402
(87) Internationale Veröffentlichungsnummer: WO 2007/015656

(57) **Zusammenfassung**

Die Erfindung betrifft ein Verfahren und ein Bauteil zur Reduzierung des aerodynamischen Geräusches, das durch den ablösenden Mediumstrom verursacht wird, der die Oberfläche des Bauteils bei dessen relativer Bewegung umströmt. Dies wird nach der Erfindung ohne zusätzliche Mittel allein durch die Ausführungsform (Querschnitt) des Bauteiles erreicht.

## Beschreibung

Die Erfindung betrifft ein Verfahren zur Reduzierung des aerodynamischen Geräusches, das durch den ablösenden Mediumstrom verursacht wird, der die Oberfläche des Bauteils bei dessen relativer Bewegung umströmt und ein Bauteil, das mit dem Verfahren nach der Erfindung arbeitet.

Es sind Verfahren zur Reduzierung des aerodynamischen Geräusches bekannt, das durch den das Bauteil der Vorrichtung (z. B. des Flugzeuges) umströmenden Fluidstrom verursacht wird, und zwar durch die Ablenkung des anlaufenden Stromes von dem Bauteil, dessen Umströmen zur Generierung des aerodynamischen Geräusches führt. So wird in EP 1 340 676 ein geräuscharmer Luftableiter vorgeschlagen, der den Bereich der Gelenkverbindung an einer Fahrwerkstrebe und einem -bein abdeckt. In der US 2004 104 301 wird als Vorrichtung, die den Strom vom Fahrwerk weg ablenkt, eine Schlitzdüse vorgeschlagen, die einen Luftstrom vor dem Flugzeugfahrwerk bildet. Dieselbe Idee, die mit einer starren Fläche realisiert ist, die sich im Flug ablenkt und das Umströmen des Fahrwerkes verhindert, wird in der WO Nr. 2004 089 743 beschrieben. Schließlich werden nach der WO Nr. 2004 039 671 gelochte Flächen vorgeschlagen, die das Geräusch des Fahrwerkes reduzieren, da sie den Luftstrom im Bereich des Fahrwerkbeines und der Flugzeugräder ablenken.

Der Hauptnachteil all dieser bekannten Lösungen ist die wesentliche Veränderung des Strömungsverhaltens der Vorrichtung im Allgemeinen. Dies kann die Aerodynamik wesentlich beeinträchtigen. Außerdem ist der Einsatz der zusätzlichen Elemente, die den Strom ablenken, mit einem größeren Gewicht der Vorrichtung, der komplizierten Bauweise und Reparatur und somit mit dem größeren Preis und den höheren Betriebskosten verbunden.

Es sind zudem Verfahren zur Verbesserung der Aerodynamik des Fluidstromes bei flachen Oberflächen bekannt, wie die RU Nr. 2 110 702 und die RU Nr. 2 191 931 zeigen. Diese Verfahren können aber bei kurvenförmigen (z. B. zylinderförmigen) Bauteilen nicht eingesetzt werden. Das Umströmen dieser Bauteile hat zur Folge, dass es zu deren unerwünschten Verhalten kommen kann. Diese Bauteile dienen dabei als Quelle des aerodynamischen Geräusches bei verschiedenen Vorrichtungen. Es ist ein Verfahren zur Reduzierung des aerodynamischen Geräusches bekannt, das durch den Fluidstrom beim Umströmen des Bauteiles (Flugzeugklappe) verursacht wird. Dabei wird die Reduzierung des aerodynamischen Geräusches durch die Veränderung der Krümmung der Element-Oberfläche erzielt, wie der RU 2 173 284 zu entnehmen ist. Gemäß diesem bekannten Verfahren wird der Geräuschpegel, der durch den Strom verursacht wird und der das Bauteil umströmt, durch die Krümmung seiner Oberfläche reduziert. Dabei wird eine glatte, kurvenförmige, voll abgerundete Fläche an seiner Seitenkante gebildet, die ursprünglich eine flache Oberfläche aufgewiesen hat. Die Geräuschreduzierung wird durch die reduzierte Intensität der Sekundärwirbel und die Beseitigung der Turbulenz im Strom erzielt, der an den gebildeten Bereich angrenzt. Das Verfahren nach der RU 2 173 284 ist zum Prototyp für das Verfahren nach der Erfindung gewählt.

In dieser bekannten Literaturstelle ist ein Bauteil (Flugzeugklappe) beschrieben, das nach diesem Prototypverfahren ausgebildet ist und den Pegel des aerodynamischen Geräusches bei der Arbeit im Fluidstrom reduziert. Das Bauteil weist eine obere, eine untere und eine seitliche Oberfläche auf, die von diesem Fluidstrom umströmt werden. Dabei wird die Reduzierung des Geräuschpegels dadurch erreicht, dass ein Bereich mit der glatten, kurvenförmigen, voll abgerundeten Oberfläche an der seitlichen Oberfläche des Bauteils ausgeführt ist. Dabei wird die Intensität der Sekundärwirbel gesenkt und die Turbulenz im Strom beseitigt, der an den so gebildeten Bereich angrenzt. Der Nachteil dieses bekannten Verfahrens und des Bauteiles ist die Unwirksamkeit beim aerodynamischen Geräusch, das beim Ablösen des Fluidstromes von der kurvenförmigen, z. B. zylinderförmigen Fläche des umströmten Bauteils erzeugt wird. Ein weiterer Nachteil ist die die Beeinflussung der Turbulenz begleitende Veränderung des Strömungsverhaltens. Diese Veränderung kann sich auf die aerodynamischen Parameter der Konstruktion im Allgemeinen auswirken.

Es ist Aufgabe der Erfindung bei einem Verfahren der eingangs erwähnten Art, die Reduzierung des aerodynamischen Geräuschpegels, der beim Ablösen des Stromes von der umströmten kurvenförmigen Fläche des Bauteils generiert wird, zu erreichen, ohne dadurch das Strömungsverhalten und die aerodynamischen Parameter der Konstruktion im Allgemeinen wesentlich zu beeinflussen.

Diese Aufgabe wird nach der Erfindung dadurch gelöst, dass das Geräusch mindestens an einem Teil der Bauteiloberfläche bestimmt wird, der für die Arbeit hinter der Ablöselinie des Mediumstromes gebildet wird und dass dieser Bereich aus mindestens einer ununterbrochenen Strecke besteht, die relativ zum Mediumstrom so ausgerichtet wird, dass die Richtung der Normalen, die zur Oberfläche des Bauteiles errichtet wird, auf der ganzen Oberfläche des genannten Bereiches oder ihrem größten Teil der Richtung des Geschwindigkeitsvektors (V) vom Mediumstrom nahe ist oder mit diesem zusammenfällt.

Bei der Erfindung ist eine Gruppe wichtig. Diese Gruppe umfasst:

das Verfahren zur Reduzierung des aerodynamischen Geräusches, welches durch den ablösenden Mediumstrom verursacht wird, der die Oberfläche des Bauteiles bei dessen relativer Bewegung umströmt, und ein geräuscharmes Bauteil zur Arbeit im Fluidstrom, das ein nach dem Verfahren angeführtes Produkt darstellt.

Das Verfahren zur Reduzierung des aerodynamischen Geräusches kann nach zwei Ausführungsformen realisiert werden.

Die erste Ausführungsform des Verfahrens besteht im Folgenden. Eine bestimmte Konstruktion stellt die Arbeit hinter der Ablöselinie des Mediumstroms sicher. Mindestens an einer Teiloberfläche des Bauteils dieser Konstruktion wird ein Bereich mit der reduzierten Krümmung gebildet. Dieser Bereich besteht mindestens aus einer ununterbrochenen Strecke. Das Bauteil wird relativ zum Mediumstrom so ausgerichtet, dass die Richtung der Normale, die zur Oberfläche des Bauteils errichtet wird, auf der ganzen Oberfläche des genannten Bereichs oder ihrem größten Teil der Richtung des Geschwindigkeitsvektors vom Mediumstrom nahe liegt oder damit zusammenfällt (Anspruch 1). Nach der ersten Ausführungsform des Verfahrens wird der Bereich mit der reduzierten Krümmung in der Entwicklungs- und Anfertigungsphase des Erzeugnisses bzw. Bauteils gebildet.

Die zweite Ausführungsform des Verfahrens besteht im Folgenden. Es wird ein Bereich mit der reduzierten Krümmung auf der Oberfläche des Bauteils bestimmt. Dieser Bereich besteht mindestens aus einer ununterbrochenen Strecke. Das Bauteil wird relativ zum Mediumstrom so ausgerichtet, dass die Richtung der Normale, die zur Oberfläche des Bauteils errichtet wird, auf der ganzen Oberfläche des genannten Bereichs oder ihrem größten Teil der Richtung des Geschwindigkeitsvektors vom Mediumstrom nahe liegt oder damit zusammenfällt (Anspruch 5). Nach der zweiten Ausführungsform des Verfahrens wird der Bereich mit der reduzierten Krümmung nicht bei der Anfertigung gebildet, sondern auf der Oberfläche des vorhandenen Bauteils bestimmt. Dabei werden die Besonderheiten seiner Geometrie benutzt. Dann wird das Bauteil hinsichtlich des Mediumstroms entsprechend ausgerichtet.

Die erste Ausführungsform des Verfahrens kann so weiter entwickelt werden, dass sie es ermöglicht, den Einsatz in Sonderfällen der Verwendung zu optimieren. Die erste Weiterentwicklung des Verfahrens besteht darin, dass der Bereich mit der reduzierten Krümmung in Form von mindestens einer Strecke der flachen Oberfläche gebildet wird (Anspruch 2).

Die zweite Weiterentwicklung des Verfahrens betrifft den Fluidstrom mit nichteinheitlicher Geschwindigkeit. Sie besteht darin, dass der Bereich mit der reduzierten Krümmung in Richtung der Erhöhung der Geschwindigkeit des nichteinheitlichen Fluidstroms erweitert wird (Anspruch 3).

Die dritte Weiterentwicklung des Verfahrens betrifft das Bauteil, das sich um die eigene Achse dreht (z. B. Fahrwerkreifen). Sie besteht darin, dass der Bereich mit der reduzierten Krümmung dadurch gebildet wird, dass die Krümmung der Oberfläche des Bauteils in der Ebene reduziert wird, die über dessen Drehachse verläuft (Anspruch 4). D. h. der Bereich des Reifens, der mit der Erde in Berührung kommt, wird möglichst flach ausgeführt.

Gegenstand der Erfindung ist auch das geräuscharme Bauteil, das im Verfahren der Erfindung verwendet wird. Dieses Bauteil ist nach der Erfindung so gestaltet, dass es ein Vorderteil der Oberfläche aufweist, das für die Arbeit im anlaufenden Fluidstrom bestimmt ist. Weiter weist das Bauteil ein Stirnteil der Oberfläche auf, das für die Arbeit hinter der Ablöselinie des Fluidstromes bestimmt ist. Dabei liegt mindestens die Hälfte der Fläche des gesamten Bereiches auf dem Stirnteil der Element-Oberfläche. Die Richtung der Normalen zur Oberfläche auf der ganzen Fläche des Bereiches mit der reduzierten Krümmung oder ihrem größten Teil ist der Richtung des Geschwindigkeitsvektors vom anlaufenden Fluidstrom hinsichtlich des Bauteiles nahe oder stimmt damit überein.

Dabei liegt mindestens die Hälfte der Fläche des genannten Bereiches am Stirnteil der Element-Oberfläche. Die Richtung der Normalen gegenüber der Oberfläche auf der ganzen Fläche des Bereiches mit der reduzierten Krümmung oder ihrem größten Teil davon liegt der Richtung des Geschwindigkeitsvektors vom anlaufenden Fluidstrom hinsichtlich des Bauteiles nahe oder stimmt damit überein (Anspruch 6). Die Einrichtung nach dieser Erfindung weist auch Weiterentwicklungen auf, die es ermöglichen, deren Verwendung in Sonderfällen zu optimieren.

Die erste Weiterentwicklung besteht darin, dass der Bereich mit der reduzierten Krümmung als mindestens eine Strecke mit flacher Oberfläche ausgeführt ist.

Die zweite Weiterentwicklung betrifft den Fluidstrom mit nichteinheitlicher Geschwindigkeit und besteht darin, dass der Bereich mit der reduzierten Krümmung in Richtung der Erhöhung der Geschwindigkeit des nicht einheitlichen Fluidstromes erweitert ist.

Schließlich betrifft eine dritte Weiterbildung ein Bauteil, das um seine Drehachse drehbar ausgeführt ist, wobei die Umgestaltung vorsieht, dass der Bereich mit der reduzierten Krümmung in der Nähe vom Schnitt der Bauteil-Oberfläche durch die Ebene gebildet ist, die durch die Drehachse verläuft.

Die Erfindung wird anhand von in den Zeichnungen schematisch dargestellten Ausführungen näher erläutert. Es zeigen:
- Fig. 1: eine Dipol-Komponente als Ergebnis der Reflexion eines Ausgangs-Quadrupols an einem Bauteil,
- Fig. 2: eine umkompensierte Dipol-Komponente des Geräusches bei Reduzierung der Krümmung der festen Oberfläche,
- Fig. 3: die Abhängigkeit des Geräuschniveaus vom Beobachtungswinkel für verschiedene Schnitte des umströmten Körpers,
- Fig. 4 und 5: die Anwendung der Erfindung bei Fahrwerkbeinen und Fahrwerkstreben eines Vorder- und Hauptfahrwerks eines Flugzeuges,
- Fig. 6: die Anwendung der Erfindung bei der Konstruktion der Streben, die das Ventilatorgehäuse festhalten und
- Fig. 7: die Anwendung der Erfindung bei der Konstruktion von Luftreifen für das Flugzeugfahrwerk.

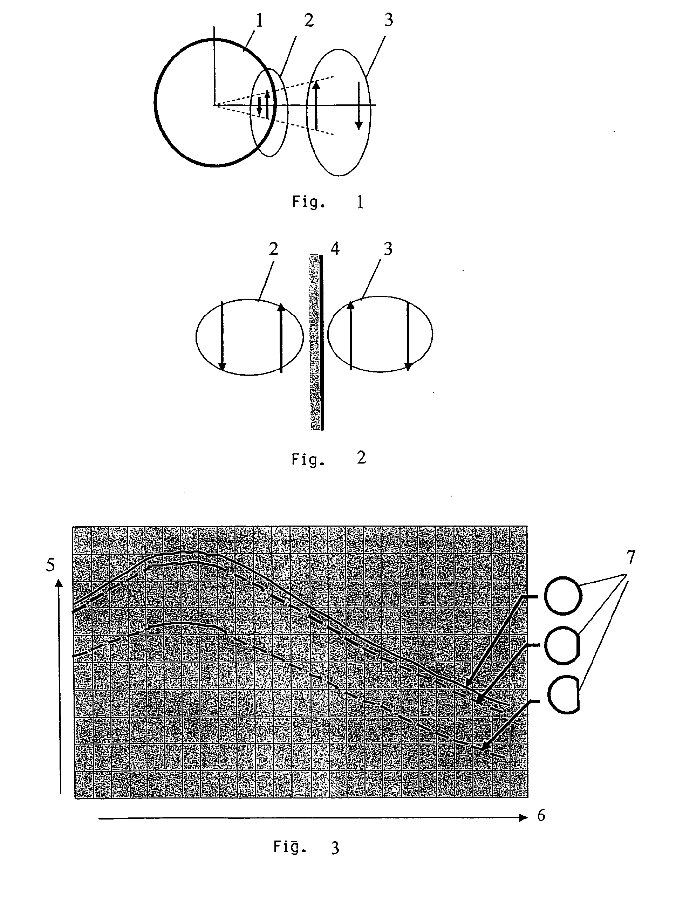

Die Erfindung beruht auf dem physikalischen Prinzip der Reflexion der Schallwellen von einer festen Oberfläche. Dieses Prinzip wird unter Anwendung der Begriffe Dipol- und Quadrupol-Geräuschquellen erläutert. Die Dipol-Geräuschquelle stellt zwei sich in der Nähe befindliche Monopole (kugelsymmetrische Punkt-Schallquellen) dar. Sie bilden Gegentaktschwingungen des Mediums mit dem Moment d. Die Quadrupol-Quelle stellt zwei Dipole dar, deren Momente *d*₁ und *d*₂ gleich sind und gegensätzlich ausgerichtet sind. Somit ist die gesamte Dipol-Komponente der Quadrupol-Geräuschquelle Δ*d* = *d*₁ *- d*₂ = 0. Eine der wichtigsten Geräuschquellen bei verschiedenen Geräten, die im Fluidstrom arbeiten, ist die Turbulenz. Die Turbulenz entsteht beim Ablösen des umströmenden Fluidstromes von der Oberfläche der Bauteile. Freie Turbulenz stellt jedoch eine kompensierte Quadrupol-Geräuschquelle dar. Das Geräusch erhöht sich wesentlich in der Nähe der festen kurvenförmigen Oberfläche 1 wegen der erscheinenden unkompensierten Dipol-Komponente. Die Dipol-Komponente entsteht als Ergebnis der Reflexion 2 des Ausgangs-Quadrupols 3 von der Oberfläche 1, wie Fig. 1 zeigt.

Die vom Autor der vorliegenden Erfindung vorgenommenen Forschungen zeigen, dass die unkompensierte Dipol-Komponente des Geräusches bei der Reduzierung der Krümmung bei der festen Oberfläche, von der die Quadrupol-Geräuschquelle reflektiert wird, sinkt und für die flache Oberfläche 4 theoretisch komplett verschwindet, wie der Fig. 2 zu entnehmen ist. (Daraus folgt, dass beim zylindrischen Element, das im Turbulenzfluss arbeitet und deren hintere Kante abgeschnitten wird, die unkompensierte Dipol-Komponente der reflektierten Quadrupol-Quellen sinkt. Diese nicht offenbarte Schlussfolgerung wurde durch eine Serie von Versuchen bestätigt. Es wurde das Geräusch erforscht, das beim querseitigen Umströmen des zylindrischen Körpers durch den Turbulenzfluss mit einer Geschwindigkeit bis 100 m/s entsteht. Die bei den Versuchen ermittelten Abhängigkeiten sind in Fig. 3 ausgeführt. Dabei sind 5 das Geräuschniveau (Schalldruckniveau), 6 der Beobachtungswinkel und 7 die verschiedenen Schnitte des umströmten Körpers.

Das Geräuschniveau sinkt bei einem Zylinder mit flacher hinterer Oberfläche um bis zu 7dB im ganzen Bereich der Beobachtungswinkel. Da die Krümmung der Zylinderoberfläche im Laufe der Versuche hinter der Ablöselinie des Stromes von dieser verändert wurde, wird der genannte Effekt ohne Änderung der durchschnittlichen Strömungsparameter und somit ohne Verschlechterung der anderen aerodynamischen Eigenschaften erreicht.

Der Effekt der Geräuschreduzierung ohne wesentlichen Einfluss auf das Strömungsverhalten und die aerodynamischen Parameter blieb auch beim wesentlicheren Abschnitt des Zylinders erhalten, wenn die Grenzen des flachen Zylinderteils etwas vorne vor der Ablöselinie lagen, die vor der Ausführung des Schnittes bestimmt wurde.

Die Verwendung des oben genannten Prinzips der Reduzierung des aerodynamischen Geräusches liegt dem Verfahren nach der Erfindung zugrunde.

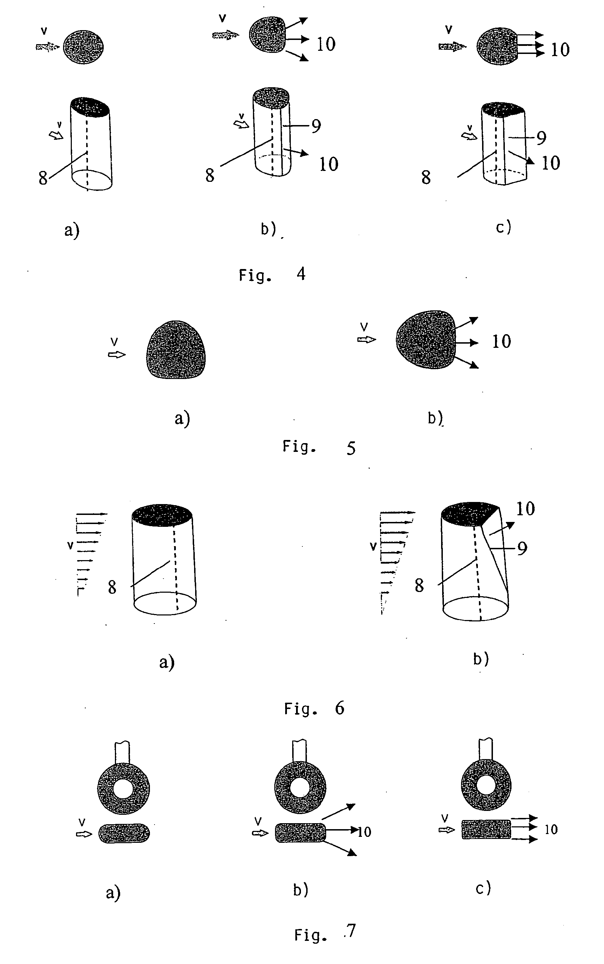

Mögliche Ausführungen zeigen die Fig. 4, 5, 6 und 7.

Fig. 4 und 5 zeigen die möglichen Anwendungen der Erfindung in den Konstruktionen für Fahrwerkbeine und -streben vom Vorder- und Hauptfahrwerk eines Flugzeuges, Elemente des hydraulischen Systems vom Fahrwerk und Fahrzeugantennen.

Fig. 6 zeigt die möglichen Anwendungen der Erfindung in der Konstruktion der Streben, die das Ventilatorgehäuse festhalten und durch den nicht einheitlichen Strom umströmt werden, der zur Peripherie aufsteigt.

Fig. 7 zeigt die möglichen Anwendungen der Erfindung in der Konstruktion der Luftreifen für das Flugzeugfahrwerk.

In den Fig. 4a, 5a, 6a und 7a sind Ausgangsform und Lage der entsprechenden Bauteile bei der Bewegung hinsichtlich des Fluidstromes dargestellt.

In Fig. 4b sind die Form und die Lage der entsprechenden Bauteile nach der Bildung des Bereiches mit der reduzierten Krümmung und der Ausrichtung des Bauteils gemäß der ersten Ausführungsform des Verfahrens gezeigt, wie es im Patentanspruch 1 beansprucht ist.

Fig. 4c enthält dasselbe bei einer Weiterentwicklung, die die Bildung des Bereiches mit der reduzierten Krümmung als eine Strecke der flachen Oberfläche vorsieht, wie im Patentanspruch 2 beansprucht.

Fig. 5b zeigt den Schnitt des Bauteiles, dessen Oberfläche einen Bereich mit der reduzierten Krümmung aufweist und das im Fluidstrom gemäß der zweiten Ausführungsform des Verfahrens ausgerichtet ist, wie im Patentanspruch 5 beansprucht ist.

Fig. 6b zeigt die Form und die Lage des entsprechenden Bauteiles nach der Bildung des Bereiches mit der reduzierten Krümmung und der Ausrichtung des Bauteils gemäß der ersten Ausführungsform des Verfahrens mit den Weiterentwicklungen. Die Weiterentwicklungen sehen die Bildung des Bereiches mit der reduzierten Krümmung als eine Strecke der flachen Oberfläche und die Erweiterung der gesamten Strecke in Richtung Erhöhung der Geschwindigkeit des nicht einheitlichen Fluidstromes vor, wie im Patentanspruch 3 beansprucht wird.

In Fig. 7b ist das Ergebnis der Anwendung der ersten Ausführungsform des Verfahrens dargestellt. Dabei wird eine Weiterentwicklung berücksichtigt, die die Reduzierung der Krümmung der Oberfläche in der Ebene sieht, die über die Drehachse des Bauteiles verläuft, wie im Patentanspruch 4 gezeigt ist.

Fig. 7c enthält dasselbe. Dabei wird eine Weiterentwicklung berücksichtigt, die die Bildung des Bereichs mit der reduzierten Krümmung als eine Strecke der flachen Oberfläche voraussetzt, wie die Patentansprüche 2 und 4 beanspruchen.

In den Fig. 4 und 6 ist die Ablöselinie 8 des Stromes von der Oberfläche der Bauteile, die z. B. versuchsweise bestimmt ist, und Bereich 9 mit der reduzierten Krümmung dargestellt.

Die Bereiche 9 nach der ersten Ausführungsform des Verfahrens werden mindestens an einem Teil der Element-Oberfläche gebildet, die für die Arbeit hinter der Ablöselinie 8 bestimmt ist. Dabei wird ihre Krümmung so geformt, dass die Normalen (Senkrechten) 10, die zur Element-Oberfläche im Bereich 9 errichtet werden, der Richtung des Geschwindigkeitsvektors V von dem das Element umströmenden Strom nahe sind oder damit übereinstimmen. Die Nähe wird hierbei in dem Sinne verstanden, dass die Projektion des Vektors V auf die Normale 10 mindestens 0,8 von seinem Modul betragen soll. Die Richtung des Vektors V wird als Richtung der Geschwindigkeit des Stroms in dessen anlaufenden Teil hinsichtlich des Bauteiles verstanden.

Die in Fig. 4 und 6 abgebildeten Ablöselinien 8 trennen das Vorder- und Stirnteil (in Bezug auf den Vektor V der Geschwindigkeit vom anlaufenden Mediumstrom) der Bauteil-Oberfläche. Das Vorderteil der Element-Oberfläche (links von der Ablöselinie 8) ist für die Arbeit im anlaufenden Mediumstrom bestimmt. Das Stirnteil der Oberfläche (rechts von der Ablöselinie 8) ist für die Arbeit hinter der Ablöselinie 8 bestimmt.

Die Bereiche 9 sind am Stirnteil der Element-Oberfläche angeordnet. Die Richtung der Normalen 10 zur Oberfläche auf der ganzen Oberfläche des Bereiches 9 oder ihrem größten Teil ist der Richtung des Geschwindigkeitsvektors vom anlaufenden Fluidstrom hinsichtlich des Bauteiles nahe oder stimmt damit überein. Der Bereich 9 kann durchgehend ausgeführt werden oder aus mehreren Strecken von Oberflächen mit reduzierter Krümmung, z. B. Strecken flacher Oberflächen, bestehen.

In Fig. 4b ist der allgemeine Fall abgebildet, bei dem der Bereich 9 mit der reduzierten Krümmung am Stirnteil des Bauteils ausgeführt wird.

In Fig. 4c ist der Fall abgebildet, bei dem der Bereich 9 mit der reduzierten Krümmung als Strecke mit flacher Oberfläche ausgeführt wird.

In Fig. 6b ist der Fall abgebildet, bei dem der Bereich 9 als eine Strecke mit flacher Oberfläche ausgeführt wird, die in Richtung der Erhöhung der Geschwindigkeit des nichteinheitlichen Fluidstromes erweitert wird.

Fig. 7b und 7c stellen den Fall dar, bei dem das Bauteil drehbar um seine Drehachse ausgeführt ist. In diesem Fall ist der Bereich mit der reduzierten Krümmung in der Nähe vom Schnitt der Bauteil-Oberfläche durch die Ebene gebildet, die durch die Drehachse des Bauteils verläuft, und bleibt am Stirnteil des drehenden Elementes bei jeder seiner Drehung erhalten. In der Krümmung ist die Richtung der Normalen 10 der Richtung des Vektors V nahe oder stimmt damit überein. Fig. 7b enthält den allgemeinen Fall, in dem der Bereich 9 mit der reduzierten Krümmung am drehenden Bauteil ausgeführt ist. Fig. 7c enthält denselben Fall, wobei aber der Bereich 9 als eine flache Oberfläche ausgebildet wird. Bei der Ausführung des Bereichs 9 an einem Reifenprotektor bilden diesen mehrere durch Vertiefungen getrennte Strecken. Falls die Bauteile eine kompliziertere Geometrie aufweisen als in den Fig. 4, 5, 6 und 7 dargestellt, ist es sinnvoll, die Bereiche mit der erhöhten Intensität der Turbulenzquellen (Quadrupolquellen) vorzubestimmen. Es ist dann auch sinnvoll, das Bauteil mit dem Bereich der reduzierten Krümmung auf den Bereich mit der maximalen Turbulenz auszurichten. Der Vorschlag stellt eine effiziente Reduzierung des aerodynamischen Geräuschpegels sicher, der durch das Ablösen des Stroms von der umströmten kurvenförmigen Oberfläche gebildet wird. Da er die Veränderung der Körperform vorwiegend hinter der Ablöselinie vorsieht, kann er bei Entwicklung von neuen und der Modernisierung von vorhandenen Konstruktionen mit minimalem Einfluss auf das Strömungsverhalten des entsprechenden Bauteiles durch das Fluid eingesetzt werden, ohne dass die aerodynamischen Parameter der Konstruktion im Allgemeinen wesentlich geändert werden.

### Gewerbliche Anwendbarkeit

Die vorgeschlagene technische Lösung kann zur Reduzierung des Umströmungsgeräusches verwendet werden, z. B. in solchen Konstruktionen wie Fahrwerkbeinen, - streben und Elementen des hydraulischen Systems vom Vorder- und Hauptfahrwerk des Flugzeugs, Fahrzeugantennen (Fig. 4 und 5), Streben, die das Ventilatorgehäuse festhalten und durch den nichteinheitlichen Strom umströmt werden, der zur Peripherie ansteigt (Fig. 6) sowie Luftreifen für das Flugzeugfahrwerk (Fig.7).

## Patentansprüche

1. Verfahren zur Reduzierung des aerodynamischen Geräusches, das durch den ablösenden Mediumstrom verursacht wird, der die Oberfläche des Bauteils bei dessen relativer Bewegung umströmt,
**dadurch gekennzeichnet,**
**dass** das Geräusch mindestens an einem Teil der Bauteiloberfläche bestimmt wird, der für die Arbeit hinter der Ablöselinie (8) des Mediumstromes gebildet wird und dass dieser Bereich (9) aus mindestens einer ununterbrochenen Strecke besteht, die relativ zum Mediumstrom so ausgerichtet wird, dass die Richtung der Normalen (10), die zur Oberfläche des Bauteiles errichtet wird, auf der ganzen Oberfläche des genannten Bereiches (9) oder ihrem größten Teil der Richtung des Geschwindigkeitsvektors (V) vom Mediumstrom nahe ist oder mit diesem zusammenfällt (Fig. 4b).

2. Verfahren nach Anspruch 1,
**dadurch gekennzeichnet,**
**dass** der Bereich (9) mit der reduzierten Krümmung als mindestens eine Strecke der flachen Oberfläche des Bauteils ausgebildet wird (Fig. 4c).

3. Verfahren nach Anspruch 1,
**dadurch gekennzeichnet,**
**dass** der Bereich (9) mit der reduzierten Krümmung in Richtung der Erhöhung der Geschwindigkeit des nicht einheitlichen Fluidstromes erweitert wird (Fig. 6b).

4. Verfahren nach Anspruch 1,
**dadurch gekennzeichnet, dass** der Bereich (9) mit der reduzierten Krümmung an einem drehbaren Bauteil durch die Reduzierung der Krümmung der Bauteil-Oberfläche in der Ebene gebildet wird, die durch die Drehachse des Bauteils verläuft (Fig. 7b).

5. Verfahren zur Reduzierung des aerodynamischen Geräusches, das durch den ablösenden Mediumstrom verursacht wird, der die Oberfläche des Bauteils bei dessen relativer Bewegung umströmt,
**dadurch gekennzeichnet,**
**dass** der Bereich (9) mit der reduzierten Krümmung auf der Bauteil-Oberfläche bestimmt wird, der aus mindestens einer ununterbrochenen Strecke besteht und dass das Bauteil relativ zum Mediumstrom so ausgerichtet wird, dass die Richtung der Normalen (10), die zur Oberfläche des Bauteils errichtet wird, auf der ganzen Oberfläche des genannten Bereiches (9) oder ihrem größten Teil der Richtung des Geschwindigkeitsvektors (V) nahe ist oder damit zusammenfällt (Fig. 5b).

6. Bauteil zur Arbeit in einem Fluidstrom nach einem Verfahren gemäß der Ansprüche 1 bis 5,
**dadurch gekennzeichnet,**
**dass** das Bauteil ein Vorderteil der Oberfläche aufweist, das für die Arbeit im anlaufenden Fluidstrom bestimmt ist, dass das Bauteil ein Stirnteil der Oberfläche aufweist, das für die Arbeit hinter der Ablöselinie (8) des Fluidstromes bestimmt ist, dass dabei mindestens die Hälfte der Fläche des gesamten Bereiches (9) auf dem Stirnteil der Element-Oberfläche liegt und dass die Richtung der Normalen (10) zur Oberfläche auf der ganzen Fläche des Bereiches (9) mit der reduzierten Krümmung oder ihrem größten Teil mit der Richtung des Geschwindigkeitsvektors (V) vom anlaufenden Fluidstrom hinsichtlich des Bauteiles nahe ist oder damit übereinstimmt.

7. Bauteil nach Anspruch 6,
**dadurch gekennzeichnet,**
**dass** der Bereich (9) mit der reduzierten Krümmung als mindestens eine Strecke mit flacher Oberfläche ausgeführt ist.

8. Bauteil nach Anspruch 6,
**dadurch gekennzeichnet,**
**dass** der Bereich (9) mit der reduzierten Krümmung in Richtung der Erhöhung der Geschwindigkeit des nicht einheitlichen Fluidstromes erweitert ist.

9. Bauteil nach Anspruch 6,
**dadurch gekennzeichnet,**
**dass** das Bauteil um seine Drehachse drehbar ausgeführt ist und dass der Bereich (9) mit der reduzierten Krümmung in der Nähe vom Schnitt der Bauteil-Oberfläche durch die Ebene gebildet ist, die durch die Drehachse verläuft.
